# EUROPÄISCHE PATENTSCHRIFT

(11) **EP 4 054 795 B1**
(45) Veröffentlichungstag und Bekanntmachung des Hinweises auf die Patenterteilung: **18.09.2024**
(21) Anmeldenummer: 20796491.7
(22) Anmeldetag: 13.10.2020
(51) Int. Cl.: B23Q 11/10, B05B 7/00, F16N 7/34

(54) **ZERSTÄUBEREINHEIT**
ATOMIZER UNIT
UNITÉ D'ATOMISATION

(30) Priorität: 07.11.2019 DE 102019130112
(43) Veröffentlichungstag der Anmeldung: 14.09.2022
(73) Patentinhaber: Broetje-Automation GmbH, 26180 Rastede (DE)
(72) Erfinder: LEHMANN, Marc, 26655 Westerstede (DE); FRERS, Henning, 26215 Wiefelstede (DE)
(74) Vertreter: Gottschald Patentanwälte Partnerschaft mbB
(86) Internationale Anmeldenummer: PCT/EP2020/078788
(87) Internationale Veröffentlichungsnummer: WO 2021/089280

(56) Entgegenhaltungen:
- DE-A1- 102004 034 689
- DE-A1- 19 842 507
- DE-U1- 202009 017 656

## Beschreibung

Die Erfindung betrifft eine Zerstäubereinheit eines Minimalmengenschmiersystems zum Kühlen und/oder Schmieren eines Zerspan-Bearbeitungsprozesses zwischen einem Werkzeug und einem Werkstück an einer Bearbeitungsstelle gemäß Anspruch 1, ein Minimalmengenschmiersystem gemäß Anspruch 10, eine Bearbeitungsanlage gemäß Anspruch 12 sowie ein Verfahren zum Betreiben einer Zerstäubereinheit oder einer Minimalmengenschmieranlage oder einer Bearbeitungsanlage gemäß Anspruch 15.

In vielen Zerspan-Bearbeitungsprozessen ist es vorteilhaft, an der Bearbeitungsstelle zwischen Werkzeug und Werkstück eine Kühlung und/oder Schmierung vorzusehen. Durch eine solche Kühlung und/oder Schmierung kann die Prozesssicherheit zumeist erheblich gesteigert werden. Es lässt sich die Bearbeitungsqualität sowie die Standzeit des Werkzeugs steigern und der Temperatureintrag ins Werkstück reduzieren. Zugleich sollen jedoch auch die Kosten für das jeweilige Kühl- und/oder Schmiermittel niedrig gehalten sowie ein unnötiges Freisetzen von Kühl- und/oder Schmiermittel in die Umgebung vermieden werden. Auch das Reinigen des Werkstücks von Kühl- und/oder Schmiermittel nach der Bearbeitung ist möglichst zu vermeiden. Mit der Größe des Werkstücks steigt der Aufwand für das Reinigen erheblich an, insbesondere, wenn dieses an vielen Stellen nur partiell bearbeitet wird. Dies gilt besonders für Flugzeugstrukturbauteile, bei denen mehrere Werkstückteile durch Bohren und Nieten miteinander verbunden werden. Um die eingesetzte Kühl- und/oder Schmiermittelmenge im Zerspan-Bearbeitungsprozess zu reduzieren, wurden daher sogenannte Minimalmengenschmiersysteme entwickelt.

Grundsätzlich sind Minimalmengenschmiersysteme für die spanende Bearbeitung bekannt, bei denen das Aerosol in einem großen Behälter erzeugt wird und von diesem über eine Leitung zur Bearbeitungsstelle geführt wird. Diese Systeme sind träge. Die Aerosolqualität, insbesondere die Konzentration des Aerosols sowie die Menge an zuzuführendem Aerosol lässt sich hier nur langsam verändern und nicht dynamisch steuern.

Ferner ist ein Minimalmengenschmiersystem aus der DE 198 42 507 A1 bekannt. Das dort beschriebene Minimalmengenschmiersystem weist eine Druckluftquelle, von der einer Düse Luft über eine Luftleitung zuführbar ist, und einen Behälter mit flüssigem Kühlschmiermittel, insbesondere Öl, auf. Von dem Behälter führt eine Ölleitung in eine Mischkammer. Ferner ist eine von der Luftleitung abzweigende Luft-Zweigleitung, über die der Mischkammer Luft zuführbar ist, vorgesehen. Über die Luftzweigleitung und die Ölleitung können Luft und Öl in die Mischkammer gelangen, in der sie zu einem Luft-Öl-Nebel verwirbelt werden. In einer weiterführenden Leitung wird der Luft-Öl-Nebel von der Mischkammer zu der Düse geleitet.

Die DE 20 2009 017 656 U1 schlägt ein Minimalmengenschmiersystem vor, das bereits eine etwas dynamischere Steuerung zulässt. Bei diesem wird das Kühl- und/oder Schmiermittel mit einer Hochdruckdüse in eine Kammer einsprüht und mittels eines Druckluftstroms zur Bearbeitungsstelle transportiert. Dieses System kann als Einkanalminimalmengenschmiersystem ausgebildet sein, bei dem das Aerosol außerhalb der Spindel einer Bearbeitungsanlage erzeugt wird und mittels einer Einkanalführung durch die Spindel und das Werkzeug zur Bearbeitungsstelle transportiert wird. Alternativ kann das System als Zweikanalminimalmengenschmiersystem ausgebildet sein, bei dem das Aerosol innerhalb der Spindel erzeugt wird und der Spindel mittels separater Leitung Druckluft und das Kühl- und/oder Schmiermittel zugeführt wird.

Dennoch besteht weiterer Optimierungsbedarf hinsichtlich der Homogenität des zu erzeugenden Aerosols, der Verbesserung der Reaktionszeit und der Einstellbarkeit der Aerosolqualität. Dies gilt besonders für Bearbeitungsanlagen, in deren Spindel bauraumbedingt die Aerosolerzeugung nicht möglich ist.

Der vorliegenden Erfindung liegt daher das Problem zugrunde, die Homogenität, die Reaktionszeit sowie die Anpassung an sich ändernde Bedingungen und die Menge des einzusetzenden Kühl- und/oder Schmiermittels zu verbessern, insbesondere bei kleinen Spindeln.

Das vorstehend genannte Problem wird bei einer Zerstäubereinheit eines Minimalmengenschmiersystems durch die Merkmale von Anspruch 1 gelöst.

Die vorschlagsgemäße Zerstäubereinheit eines Minimalmengenschmiersystems zum Kühlen und/oder Schmieren eines Zerspan-Bearbeitungsprozesses zwischen einem Werkzeug und einem Werkstück an einer Bearbeitungsstelle weist eine Kammeranordnung mit einer Einspritzkammer und mit einer Zerstäuberkammer auf. Die Einspritzkammer ist durch eine Düse mit der Zerstäuberkammer verbunden. Die Zerstäubereinheit weist mindestens einen ersten Zuführkanal zum Zuführen eines ersten Druckluftstroms in die Einspritzkammer und mindestens einen zweiten Zuführkanal zum Zuführen eines zweiten Druckluftstroms in die Zerstäuberkammer auf. Ferner weist die Zerstäubereinheit ein Einspritzventil zum Einspritzen eines Kühl- und/oder Schmiermittels in den ersten Druckluftstrom im Einspritzbereich der Einspritzkammer auf. Sie ist derart ausgestaltet, dass der erste Druckluftstrom, gegebenenfalls mit dem eingespritzten Kühl- und/oder Schmiermittel, durch die Düse von der Einspritzkammer in die Zerstäuberkammer strömt und darin von der Düse zerstäubt wird. Der erste Druckluftstrom, gegebenenfalls mit dem eingespritzten Kühl- und/oder Schmiermittel, vereinigt sich in der Zerstäuberkammer mit dem zweiten Druckluftstrom zu einem Transportstrom zum Transport des eingespritzten Kühl- und/oder Schmiermittels. Der Transportstrom kann dann durch einen Weiterführungskanal dann zur Bearbeitungsstelle geleitet werden.

Das Einspritzen des Kühl- und/oder Schmiermittels in einen ersten Druckluftstrom und das Strömen des ersten Druckluftstroms mit dem gegebenenfalls eingespritzten Kühl- und/oder Schmiermittel durch die Düse und die Vereinigung mit dem zweiten Druckluftstrom ermöglicht eine besonders homogene Verteilung und geringe Konzentration des Kühl- und/oder Schmiermittels im Transportstrom und damit ein besonders präzises und gleichmäßiges, flexibel einstellbares Zuführen von Kühl- und/oder Schmiermittel zur Bearbeitungsstelle. Es wird eine besonders hohe Qualität des durch die Zerstäubereinheit generierten Aerosols erreicht. Weiter stabilisiert wird die Aerosolqualität zudem durch das Vorsehen der Heizung.

Daher weist die vorschlagsgemäße Zerstäubereinheit eine Heizung auf, welche das Kühl- und/oder Schmiermittel und/oder den ersten Druckluftstrom und/oder den zweiten Druckluftstrom und/oder den Transportstrom erwärmt.

Ein erwärmtes Kühl- und/oder Schmiermittel lässt sich besser zerstäuben und sorgt so für eine weiter gesteigerte Aerosolqualität. Darüber hinaus reduziert sich auch die Abhängigkeit der Aerosolqualität von Umgebungseinflüssen wie beispielsweise der Umgebungstemperatur. Hierdurch ist auch unter wechselnden Umgebungsbedingungen eine hohe Aerosolqualität erreichbar. Zudem ist die vorschlagsgemäße Zerstäubereinheit auch sehr kompakt und kann daher einfach in die Bearbeitungsanlage integriert werden.

Gemäß Anspruch 2 wird insbesondere das Kühl- und/oder Schmiermittel vor dem Einspritzen aus dem Einspritzventil in den ersten Druckluftstrom erwärmt. Dies ist nun mit einem besonders geringen Energieeinsatz möglich, da im Vergleich zur Druckluftmenge nur eine sehr geringe Menge an Kühl- und/oder Schmiermittel pro Zeit der Zerstäubereinheit zugeführt wird.

Gemäß der bevorzugten Weiterbildung nach Anspruch 3 ist das Einspritzventil in einem, insbesondere mehrteiligen, Block aufgenommen. In diesem kann zusätzlich die Heizung und/oder ein Temperaturfühler angeordnet sein. Hierdurch kann eine besonders gute und gleichmäßige Wärmeübertragung auf das Kühl- und/oder Schmiermittel gewährleistet werden.

Ein konstruktiv einfacher und effizienter Aufbau ergibt sich, wenn der Block zumindest einen Teil der Einspritzkammer bildet und/oder zumindest einen Teil der Zerstäuberkammer bildet und/oder die Düse im Block gelagert ist.

Um eine sehr hohe Reaktionsfähigkeit, insbesondere auch hinsichtlich der Einstellung bzw. Veränderung der Kühl-/Schmierparameter zu ermöglichen, sind vorzugsweise die Einspritzkammer und/oder die Zerstäuberkammer wie im Anspruch 5 ausgebildet.

Auch ein geringer Abstand der Düse zum Einspritzventil ermöglicht eine hohe Aerosolqualität und flexible Einstellung des Aerosols (Anspruch 6).

Die Düse ist vorzugsweise wie im Anspruch 7 beschrieben ausgebildet. Hierdurch wird ein besonders homogenes Aerosol erzeugt.

Gemäß Anspruch 8 ist das Einspritzventil ein Hochdruckeinspritzventil, insbesondere ein Benzindirekteinspritzventil. Dieses ermöglicht eine sehr präzise Ansteuerung und entsprechend eine flexible Einstellung der Aerosolqualität.

Bei einer Ausbildung gemäß Anspruch 9 kann eine besonders flexible und reaktionsschnelle Dosierung bei hoher Homogenität erreicht werden.

Darüber hinaus wird das eingangs geschilderte Problem bei einem Minimalmengenschmiersystem in den Merkmalen von Anspruch 10 gelöst.

Das Minimalmengenschmiersystem kann dabei alle im Zusammenhang mit der Zerstäubereinheit beschriebenen Merkmale einzeln oder in Kombination aufweisen. Es ergeben sich dieselben Vorteile, wie im Zusammenhang mit der Zerstäubereinheit beschrieben.

Die Weiterbildung gemäß Anspruch 11 betrifft bevorzugte Betriebsparameter des Minimalmengenschmiersystems. In diesem Bereich lässt sich das Minimalmengenschmiersystem für kleinere Bohrungen besonders effizient betreiben.

Darüber hinaus wird das eingangs beschriebene Problem bei einer Bearbeitungsanlage durch die Merkmale des Anspruchs 12 gelöst.

Die Bearbeitungsanlage weist dabei die im Zusammenhang mit der Zerstäubereinheit oder dem Minimalmengensystem beschriebenen Merkmale einzeln und/oder in Kombination auf. Es ergeben sich dieselben Vorteile wie im Zusammenhang mit der Zerstäubereinheit und dem Minimalmengenschmiersystem beschrieben.

Bevorzugte Ausgestaltungen der Bearbeitungsanlage sind in den Ansprüchen 13 und 14 beschrieben.

Schließlich wird das eingangs erläuterte Problem verfahrensmäßig mit den Merkmalen von Anspruch 15 gelöst.

Es ergeben sich die gleichen Vorteile wie vorstehend im Zusammenhang mit der Zerstäubereinheit, dem Minimalmengenschmiersystem und/oder der Bearbeitungsanlage beschrieben.

Bei dem Verfahren kann eine Zerstäubereinheit oder ein Minimalmengenschmiersystem oder eine Bearbeitungsanlage wie hier beschrieben verwendet werden.

Im Folgenden wird die Erfindung anhand einer lediglich ein Ausführungsbeispiel darstellenden Zeichnung näher erläutert. In der Zeichnung zeigt
- Fig. 1: eine schematische Darstellung einer vorschlagsgemäßen Bearbeitungsanlage mit einer vorschlagsgemäßen Zerstäubereinheit eines vorschlagsgemäßen Minimalmengenschmiersystems,
- Fig. 2: in schematischer Darstellung ein Ausführungsbeispiel eines vorschlagsgemäßen Minimalmengenschmiersystems mit der vorschlagsgemäßen Zerstäubereinheit aus Fig. 1 in dreidimensionaler Außenansicht,
- Fig. 3: eine Explosionszeichnung der Zerstäubereinheit aus Fig. 2,
- Fig. 4: einen Schnitt durch die Zerstäubereinheit des Ausführungsbeispiels gemäß der Ansicht IV-IV aus Fig. 2 und eine vergrößerte Detailansicht des Schnittes und
- Fig. 5: eine dreidimensionale Darstellung der Zerstäubereinheit und einen Schnitt gemäß der Ansicht A-A.

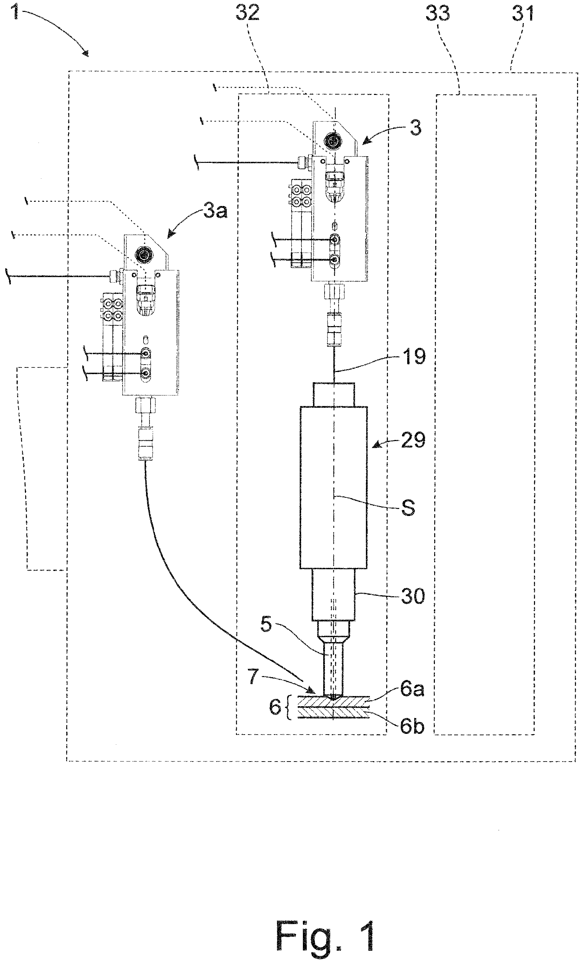

Die Fig. 1 zeigt schematisch eine vorschlagsgemäße Bearbeitungsanlage 1 mit einem vorschlagsgemäßen Minimalmengenschmiersystem 2, welches eine vorschlagsgemäße Zerstäubereinheit 3 aufweist.

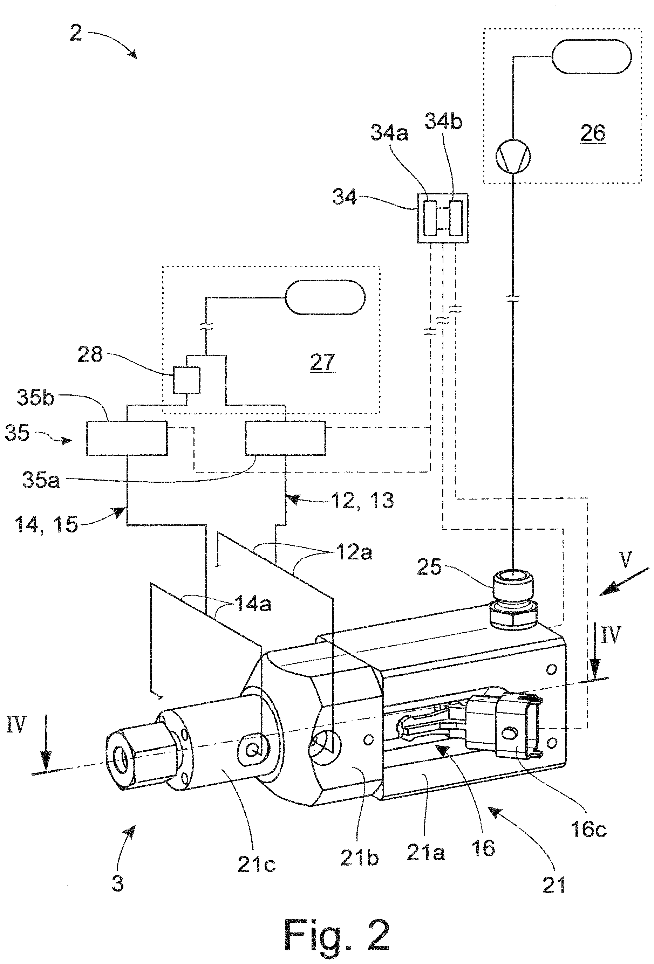

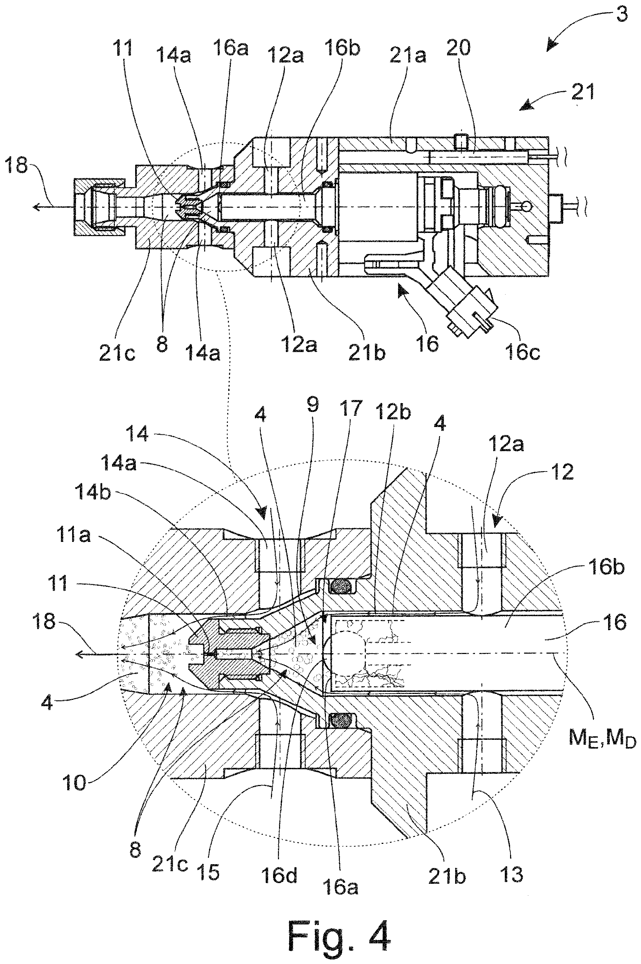

Die Funktionsweise der Zerstäubereinheit 3 soll anhand der Fig. 4 erläutert werden, welche die Zerstäubereinheit im Schnitt gemäß IV-IV der Fig. 2 zeigt.

Die Zerstäubereinheit 3 dient dem Bereitstellen des Kühl- und/oder Schmiermittels 4 zum Kühlen und/oder Schmieren eines Zerspan-Bearbeitungsprozesses zwischen einem Werkzeug 5 und einem Werkstück 6 an einer Bearbeitungsstelle 7.

Bei dem Werkzeug 5 kann es sich insbesondere um ein spanendes Werkzeug, hier und vorzugsweise einen Bohrer, handeln. Das Werkstück 6 ist hier und vorzugsweise ein Strukturbauteil, insbesondere ein Flugzeugstrukturbauteil. Flugzeugstrukturbauteile sind beispielsweise Rumpfsektionen und/oder Flügelsektionen eines Flugzeugs. Das Werkstück 6 kann aus mehreren Werkstückteiten 6a, 6b bestehen. Sie werden hier gemeinsam durchbohrt und anschließend miteinander vernietet. Die Werkstückteile 6a, 6b können aus einem Material und/oder als Verbund und/oder als Hybridbauteil ausgebildet sein. Insbesondere kann ein Werkstückteil ein Metallfaserverbundbauteil sein, welches aus mehreren Lagen, insbesondere Metalllagen und Faserlagen, gebildet wird. Gerade bei diesen Bauteilen kann die Erfindung aufgrund ihrer hohen Einstellflexibilität einen Mehrwert generieren.

Die vorschlagsgemäße Zerstäubereinheit 3 weist eine Kammeranordnung 8 mit einer Einspritzkammer 9 und mit einer Zerstäuberkammer 10 auf, wobei die Einspritzkammer 9 durch eine Düse 11 mit der Zerstäuberkammer 10 verbunden ist. Ferner weist die Zerstäubereinheit 3 mindestens einen ersten Zuführkanal 12 zum Zuführen eines ersten Druckluftstroms 13 in die Einspritzkammer 9 und mindestens einen zweiten Zuführkanal 14 zum Zuführen eines zweiten Druckluftstroms 15 in die Zerstäuberkammer 10 auf. Auch weist die Zerstäubereinheit 3 vorschlagsgemäß ein Einspritzventil 16 zum Einspritzen eines Kühl- und/oder Schmiermittels 4 in den ersten Druckluftstrom 13 im Einspritzbereich 17 der Einspritzkammer 9 auf.

Wie in der Fig. 4 gezeigt, ist die Zerstäubereinheit 3 dabei derart ausgestaltet, dass der erste Druckluftstrom 13, gegebenenfalls mit dem eingespritzten Kühl- und/oder Schmiermittel 4, durch die Düse 11 von der Einspritzkammer 9 in die Zerstäuberkammer 10 strömt und darin von der Düse 11 zerstäubt wird. Hierdurch wird ein Aerosol gebildet.

Unter einem Aerosol wird ein kolloides System aus Gas, hier der Druckluft, mit darin verteilten kleinen festen und/oder flüssigen Teilchen (Schwebstoffen, hier dem Kühl- und/oder Schmiermittel) verstanden. Hier und vorzugsweise sind es flüssige Teilchen. Die Teilchen weisen vorzugsweise Durchmesser von 10⁻⁷ bis 10⁻³ cm auf. Das Kühl- und/oder Schmiermittel 4 weist im Ausführungsbeispiel und vorzugsweise eine kinematische Viskosität von 9×10⁻⁶ m³ pro Sekunde auf.

Der erste Druckluftstrom 13, gegebenenfalls mit dem eingespritzten Kühl- und/oder Schmiermittel 4, vereinigt sich in der Zerstäuberkammer 10 mit dem zweiten Druckluftstrom 15 zu einem Transportstrom 18 zum Transport des eingespritzten Kühl- und/oder Schmiermittels 4. Von der Zerstäuberkammer 10 wird der Transportstrom 18 im Ausführungsbeispiel durch einen Weiterführungskanal 19 zu der Bearbeitungsstelle 7 geleitet. Hier schließt sich der Weiterführungskanal 19 unmittelbar an die Zerstäuberkammer an. Hier und vorzugsweise zeichnet sich der Weiterführungskanal dadurch an, dass dieser von der Zerstäuberkammer lösbar ist. Insbesondere kann es sich bei dem Weiterleitungskanal um einen flexiblen Schlauch handeln.

Das Einspritzen des Kühl- und/oder Schmiermittels 4 in den ersten Druckluftstrom 13 und das spätere stromabwärts vorgesehene Hinzufügen eines zweiten Druckluftstroms 15 nach dem Zerstäuben durch die Düse 11 ermöglicht eine homogene Verteilung des Kühl- und/oder Schmiermittels 4 bei niedriger Konzentration im Transportstrom 18. Es wird ein Aerosol aus Druckluft und Kühl- und/oder Schmiermittel 4 hergestellt. Ferner ermöglicht dieser konstruktive Aufbau der Zerstäubereinheit 1 kurze Reaktionszeiten für das Zu- und Abschalten des Aerosols zum Zerspan-Bearbeitungsprozess. Dies ist besonders von Vorteil bei kurzen Zerspan-Bearbeitungsprozessen, wie beispielsweise beim Bohren, insbesondere von dünnen mehrschichtigen Werkstücken 6 bzw. Werkstückteilen 6a, 6b.

Dass die Zerstäubereinheit 3 vorschlagsgemäß eine Heizung 20 aufweist, welche das Kühl- und/oder Schmiermittel 4 und/oder den ersten Druckluftstrom 13 und/oder den zweiten Druckluftstrom 15 und/oder den Transportstrom 18, insbesondere vor dem Austritt aus der Zerstäuberkammer 10 und/oder vor dem Eintritt in den Weiterführungskanal 19, erwärmt, führt zu einer weiteren Stabilisierung des Aerosols. Insbesondere können Umgebungseinflüsse wie Temperaturschwankungen im Nahbereich der Bearbeitungsanlage 1 auf die Aerosolqualität reduziert werden. Hierdurch wird eine noch stabilere, flexible und sehr reaktionsschnelle Versorgung der Bearbeitungsstelle 7 mit Kühl- und/oder Schmiermittel 4 erreicht.

Besonders bevorzugt erwärmt die Heizung 20 das Kühl- und/oder Schmiermittel 4 vor dem Einspritzen aus dem Einspritzventil 16 in den ersten Druckluftstrom 13 und/oder vor, insbesondere unmittelbar vor, dem Eintritt in das Einspritzventil 16, wie dies auch im Ausführungsbeispiel realisiert ist.

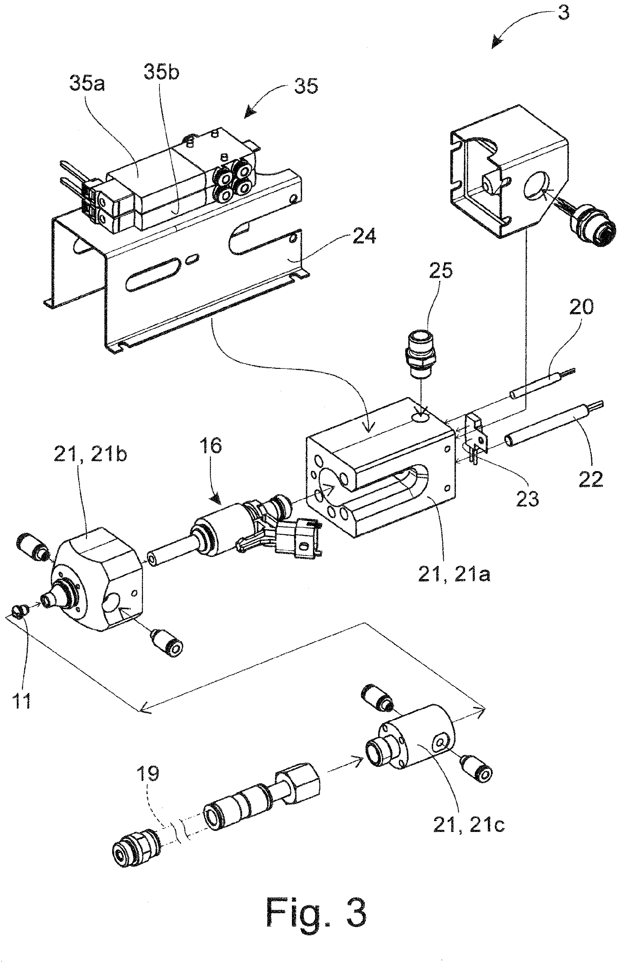

Wie in den Fig. 2 und 3 gezeigt, ist das Einspritzventil 16 in einem, insbesondere mehrteiligen, Block 21, insbesondere Metallblock, aufgenommen. Der Block 21 ist vorzugsweise aus Stahl, insbesondere Edelstahl, und/oder Aluminium. Die Heizung 20 erwärmt den Block 21 und dieser das Kühl- und/oder Schmiermittel 4. Das Einspritzventil 16 ist im Ausführungsbeispiel über seine gesamte Länge im Block 21 aufgenommen. Vorzugsweise wird das Kühl- und/oder Schmiermittel 4 auch im Einspritzventil 16 erwärmt.

Zusätzlich zu dem Einspritzventil 16 sind hier und vorzugsweise in dem Block 21 die Heizung 20 und/oder ein Temperaturfühler 22 angeordnet. Ferner kann, wie in der Fig. 3 gezeigt, ein Temperaturgrenzschalter 23 vorgesehen sein, welcher die Heizung 20 bei Überschreiten einer vorbestimmten Temperatur, vorzugsweise 90°C, weiter vorzugsweise 80°C, abschaltet. Die Heizung 20 ist vorzugsweise als Heizstab ausgebildet.

Der Block 21 ist im Ausführungsbeispiel dreiteilig ausgebildet. Er kann aber beispielsweise auch lediglich zweiteilig ausgebildet sein. Das Einspritzventil 16 ist zumindest teilweise in einem Teil 21a, 21b, 21c des mehrteiligen Blocks 21 aufgenommen (hier im ersten Blockteil 21a). Die Heizung 20 und/oder der Temperaturfühler 22 sind vorzugsweise in demselben Teil des mehrteiligen Blocks 21 aufgenommen (hier im ersten Blockteil 21a). Dies ist in der Fig. 3 gezeigt.

Im Ausführungsbeispiel steigt die Nummerierung der Blockteile 21a, 21b, 21c in Strömungsrichtung an. Auch wenn die Heizung 20 hier nur in einem Blockteil aufgenommen ist, erwärmt sie vorzugsweise den gesamten Block 21. Die Blockteile haben im montierten Zustand hier alle unmittelbaren Kontakt. Sie sind vorzugsweise aus demselben Material.

Der Temperaturfühler 22 dient hier und vorzugsweise dem Steuern und/oder Regeln des Heizung 20. Vorzugsweise wird die Heizung 20 derart betrieben, dass diese den Block 21 auf eine im Wesentlichen konstante Temperatur und/oder eine Temperaturkurve regelt. Hier und vorzugsweise wird der Block 21 auf eine, insbesondere im Wesentlichen konstante, Temperatur zwischen 20°C und 80°C, weiter vorzugsweise zwischen 30°C und 70°C, weiter vorzugsweise zwischen 40°C und 60°C, im Ausführungsbeispiel 50°C, eingestellt.

Hierdurch wird eine besonders effiziente Wärmeübertragung auf das Kühl- und/oder Schmiermittel 4 ermöglicht.

Vorzugsweise wird die Heizung 20 auch in Abhängigkeit von der Viskosität des verwendeten Kühl- und/oder Schmiermittels 4 eingestellt. Beispielsweise kann bei einem Kühl- und/oder Schmiermittel 4 mit einer größeren Viskosität der Block 21 auf eine höhere Temperatur geregelt bzw. gesteuert werden, als bei einem Kühl- und/oder Schmiermittel 4 mit einer niedrigeren Viskosität.

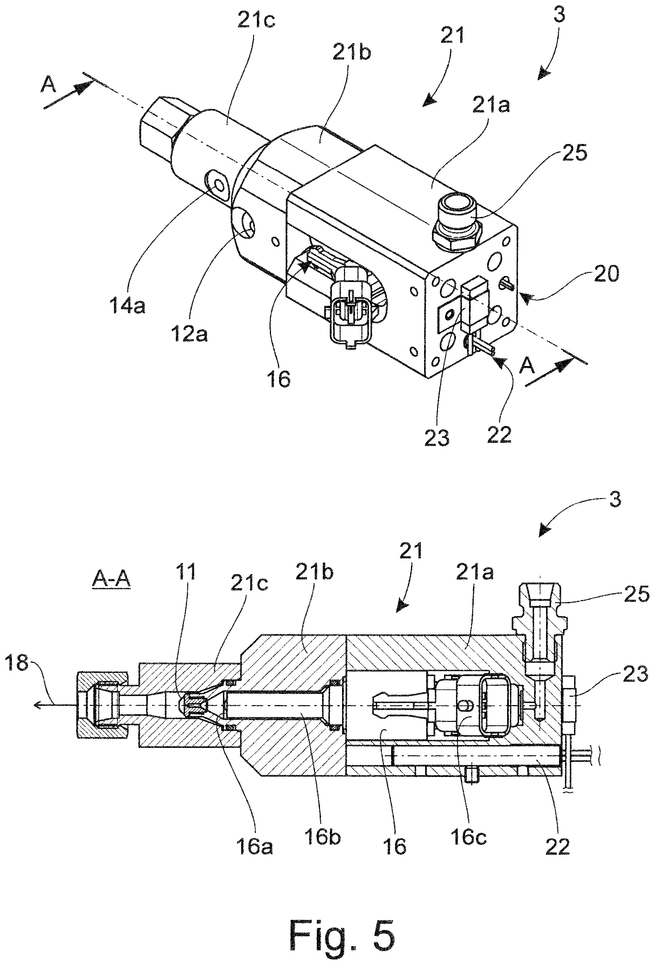

Ferner ist hier und vorzugsweise der Temperaturgrenzschalter 23 an demselben Teil des Blocks 21 angeordnet. Im Ausführungsbeispiel ist er, wie in der Fig. 5 gezeigt, auf der Rückseite der Zerstäubereinheit 3 angeordnet.

Als Wärmeschild weist die Zerstäubereinheit 3 ferner eine Abdeckung 24 auf, welche vorzugsweise beabstandet zum Block 21 angeordnet ist. Hierdurch hält der Block 21 zum einen besser seine Temperatur und zum anderen wird ein versehentlicher Kontakt mit dem warmen Block 21 verhindert, welcher zu Verbrennungen führen könnte.

Wie der Fig. 3 weiter zu entnehmen ist, nimmt im Ausführungsbeispiel ein zweiter Teil des Blocks 21 (zweiter Blockteil 21b) das Einspritzventil 16 auch zum Teil auf. Vorzugsweise ist auch die Düse 11 im Block 21 aufgenommen und/oder von diesem ausgebildet. Die Düse 11 ist im Ausführungsbeispiel im Block 21, hier im zweiten Teil des Blocks 21, gelagert.

Hier und vorzugsweise ist es so, dass der Block 21 zumindest einen Teil der Einspritzkammer 9 und/oder zumindest einen Teil der Zerstäuberkammer 10 bildet, wie dies in der Fig. 4 gezeigt ist. Im Ausführungsbeispiel wird die Einspritzkammer 9 von dem Einspritzventil 16 und dem zweiten Blockteil 21b gebildet. Sie entsteht durch die Aufnahme des Auslassendes 16a des Einspritzventils 16 im zweiten Blockteil 21b. Vorzugsweise hat die Einspritzkammer 9 ein Volumen von maximal 10.000 mm³ groß, weiter vorzugsweise von maximal 1.000 mm³, weiter vorzugsweise von maximal 500 mm³, im Ausführungsbeispiel von 250 mm³.

Die Zerstäuberkammer 10 wird vom zweiten und dritten Blockteil 21b, 21c sowie gegebenenfalls von der Düse 11 gebildet. Dies ist in der Fig. 4 gezeigt. Vorzugsweise ist die Zerstäuberkammer 10 um einen Faktor 2 bis 5 größer als die Einspritzkammer 9. Die Zerstäuberkammer 10 hat vorzugsweise ein Volumen von maximal 20.000 mm³, weiter vorzugsweise von maximal 5.000 mm³, weiter vorzugsweise von maximal 1.000 mm³und im Ausführungsbeispiel von 750 mm³.

Vorzugsweise ist die Düse 11 maximal 10 cm, vorzugsweise maximal 5 cm, weiter vorzugsweise maximal 3 cm, weiter vorzugsweise maximal 1,5 cm, von dem Einspritzventil 16, insbesondere dem Auslassende 16a des Einspritzventils 16, entfernt. Dies ist in der Fig. 4 gezeigt.

Der Fig. 4 kann ebenfalls entnommen werden, dass der erste Druckluftstrom 13 im Ausführungsbeispiel durch mehrere, hier zwei, erste Teilzuführkanäle 12a in die Zerstäubereinheit 3 strömt. Diese führen hier und vorzugsweise einander gegenüberliegend weiter in den Block 21, hier den zweiten Blockteil 21b. Die ersten Teilzuführkanäle 12a werden hier und vorzugsweise in der Zerstäubereinheit 3, hier im Block 21 (zweiter Blockteil 2c), zu einem ersten Gesamtzuführungskanal 12b vereint. Die Zuführung des ersten Druckluftstroms 13 zur Einspritzkammer 9 erfolgt hier radial umlaufend um das Einspritzventil 16 bzw. das Auslassende 16a des Einspritzventils 16. Vorzugsweise verläuft mindestens eine Richtungskomponente des ersten Druckluftstroms 13 beim Eindringen in die Einspritzkammer 9 in Haupteinspritzrichtung des Kühl- und/oder Schmiermittels 4. Hier und vorzugsweise verläuft der erste Druckluftstrom 13 unmittelbar vor dem Eindringen in die Einspritzkammer 9 im Wesentlichen parallel zur Haupteinspritzrichtung des Kühl- und/oder Schmiermittels 4. Die Haupteinspritzrichtung ist im Ausführungsbeispiel entlang der Mittelachse M_{E} des Einspritzventils 16 gerichtet.

Von der Einspritzkammer 9 strömt der erste Druckluftstrom 13, gegebenenfalls mit dem eingespritzten Kühl- und/oder Schmiermittel 4, durch die Düse 11 in die Zerstäuberkammer 10. In der Zerstäuberkammer 10 wird das Kühl- und/oder Schmiermittel 4 durch die Düse 11 in den zweiten Druckluftstrom 14 zerstäubt, wie dies in der Fig. 4 gezeigt ist. Sie ist stromabwärts der Einspritzkammer 9 angeordnet. Grundsätzlich kann das Kühl- und/oder Schmiermittel 4 bereits beim Einspritzen desselben in die Einspritzkammer 9 zerstäubt werden. Hier und vorzugsweise wird es jedoch in der Zerstäuberkammer 10 zumindest weiter zerstäubt. Auf diese Weise lässt sich ein homogenes Aerosol für das Kühlen und/oder Schmieren des Bearbeitungsprozesses erzeugen.

Das eingespritzte Kühl- und/oder Schmiermittel 4 wird durch den ersten Druckluftstrom 13 durch die Durchtrittsöffnung 11a der Düse 11 getrieben. Der erste Druckluftstrom 13 fördert also das eingespritzte Kühl- und/oder Schmiermittel 4 durch die Düse 11 und zerstäubt es so in der Zerstäuberkammer 10.

Die Durchtrittsöffnung 11a ist hier und vorzugsweise im Wesentlichen rund ausgebildet. Grundsätzlich kann sie jedoch eine andere Geometrie aufweisen. Ihre maximale Durchtrittöffnungsweite beträgt hier und vorzugsweise maximal 0,5 mm, vorzugsweise maximal 0,3 mm, weiter vorzugsweise maximal 0,2 mm.

Der zweite Druckluftstrom 15 strömt im Ausführungsbeispiel wie in der Fig. 4 gezeigt durch mehrere, hier zwei zweite Teilzuführungskanäle 14a in die Zerstäubereinheit 3. Diese führen hier und vorzugsweise einander gegenüberliegend weiter in den Block 21, hier den dritten Blockteil 21c. Die ersten Teilzuführkanäle 12a werden hier und vorzugsweise in der Zerstäubereinheit 3, insbesondere im Block 21 (dritter Blockteil 2c), zu einem zweiten Gesamtzuführkanal 14b vereint. Die Zuführung zur Zerstäuberkammer 10 erfolgt hier radial umlaufend um die Düse 22. Vorzugsweise verläuft mindesten eine Richtungskomponente des ersten Druckluftstroms 13 beim Eindringen in die Zerstäuberkammer 10 in Längsrichtung der Durchtrittsöffnung 11a. Hier verläuft der zweite Druckluftstrom 15 unmittelbar vor dem Eindringen in die Zerstäuberkammer 10 im Wesentlichen parallel zur Längsrichtung der Durchtrittsöffnung 11a. Bei aufgebautem Transportstrom ist der Volumenstrom des zweiten Druckluftstroms 15 hier und vorzugsweise größer als der Volumenstrom des ersten Druckluftstroms 13. Weiter vorzugsweise ist der Volumenstrom des zweiten Druckluftstroms 15 mindestens um den Faktor 2 größer als der Volumenstrom des ersten Druckluststroms 13, weiter vorzugsweise mindestens um den Faktor 5 grö-ßer als der Volumenstrom des ersten Druckluftstroms 13, weiter vorzugsweise mindestens um den Faktor 10 größer als der Volumenstrom des ersten Druckluftstroms 13.

Die Zerstäubereinheit 3 weist einen Anschluss 25 für die Zuleitung des Kühl- und/oder Schmiermittels 4 auf. Dieser ist hier und vorzugsweise am Block 21 vorgesehen. Von diesem Anschluss 25 wird das Kühl- und/oder Schmiermittel 4 zu dem Einspritzventil 16 geführt. Im Ausführungsbeispiel und vorzugsweise ist das Kühl und/oder Schmiermittel 4 auf dem Weg vom Anschluss 25 bis zu dem Einspritzventil 16 im direkten Kontakt mit dem Block 21. Hierdurch wird ein besonders guter Wärmeeintrag von der Heizung 20 in das Kühl- und/oder Schmiermittel 4 gewährleistet. Auch im Einspritzventil 16 kann das Kühl- und/oder Schmiermittel 4 weiter erwärmt werden. Der Block 21, welcher die Wärme der in ihm angeordneten Heizung 20 aufnimmt, gibt diese an das Einspritzventil 16 und dieses an das Kühl- und/oder Schmiermittel 4 weiter.

Bei dem Einspritzventil 16 handelt es sich hier und vorzugsweise um ein Hochdruckeinspritzventil, insbesondere ein Bezindirekteinspritzventil. Dieses ist aus dem Automobilbereich bekannt und zuverlässig erprobt. Das Einspritzventil 16 ist elektrisch ansteuerbar. Es wird hier und vorzugsweise mit einer Spannung von 48 V versorgt. Zur Ansteuerung und/oder Spannungsversorgung weist es einen elektrischen Anschluss 25 auf. Dieser ist mit einer Steuerungsanordnung 34 verbindbar. Zum Öffnen und/oder Schließen des Einspritzventils 16 weist dieses hier und vorzugsweise einen Elektromagneten und/oder einen Piezoaktuator auf. Mittels diesen wird ein Schließstift 16d zum Öffnen und/oder Schlie-ßen des Einspritzventils 16 bewegt.

Das Auslassende des Einspritzventils 16 ist am Ende eines länglichen Abschnitts 16b ausgebildet. Hier und vorzugsweise ist dieser zylindrisch. Zur Wärmeübertragung, insbesondere vom Block 21, an das Kühl- und/oder Schmiermittel 4 ist hier und vorzugsweise der längliche Abschnitt 16b zumindest teilweise, insbesondere ganz, aus Metall ausgebildet.

Der elektrische Anschluss 16c des Einspritzventils 16 ragt hier und vorzugsweise aus dem Block 21 heraus, wie dies in der Fig. 2 bzw. 5 gezeigt ist. Hier ragt er aus einer Öffnung 21d des ersten Blockteils 21a heraus.

Hier und vorzugsweise ist es ferner so, dass das Einspritzventil 16 pulsartig angesteuert wird. Dabei ist bevorzugt die Öffnungsdauer des Einspritzventils 16 kürzer als die Dauer zwischen zwei Öffnungen des Einspritzventils 16 vorzusehen.

Insbesondere kann vorgesehen sein, dass für verschiedene Kühl- und/oder Schmiermittel 4 unterschiedliche Pulsfrequenzen einstellbar sind. Vorzugsweise wird die Dauer zwischen zwei Öffnungen des Einspritzventils 16, insbesondere in Abhängigkeit von der Viskosität des Kühl- und/oder Schmiermittels 4, verstellt. Die Öffnungsdauer des Einspritzventils 16 während eines Pulses bleibt dabei vorzugsweise konstant.

Zum Einspritzen des Kühl- und/oder Schmiermittels wird das Einspritzventil 16 vorzugsweise mit einer Ansteuerfrequenz von 5 bis 100 Hz, vorzugsweise 10 bis 50 Hz, hier 35 Hz, angesteuert. Die Öffnungsdauer des Einspritzventils beträgt vorzugsweise weniger als 10 ms, weiter vorzugsweise weniger als 2 ms, weiter vorzugsweise weniger als 1 ms, weiter vorzugsweise weniger als 0,5 ms, weiter vorzugsweise weniger als 0,4 ms, und im Ausführungsbeispiel 0,37 ms.

Im Ausführungsbeispiel und vorzugsweise ergibt sich eine Kühl- und/oder Schmiermitteleinspritzmenge im Transportluftstrom von 29 g pro Stunde.

Zum Schalten und/oder Regeln des ersten und/oder zweiten Druckluftstroms 13, 15 weist das Minimalmengenschmiersystem 2, insbesondere die Zerstäubereinheit 3, eine Druckluftventilanordnung 35 auf. Die Druckluftventilanordnung weist hier ein Schaltventil 35a zum Schalten des ersten Druckluftstroms 13 und/oder ein Schaltventil 35b zum Schalten des zweiten Druckluftstroms 15 auf. Die beiden Druckluftströme 13, 15 können separat voneinander geschaltet werden. Vorzugsweise ist die Druckluftventilanordnung 35 an der Abdeckung 24 befestigt.

Die Fig. 2 zeigt das vorschlagsgemäße Minimalmengenschmiersystem 2. Es weist im Ausführungsbeispiel die zuvor beschriebene Zerstäubereinheit 3 auf.

Das Minimalmengenschmiersystem 2 ist hier und vorzugsweise dazu geeignet und/oder eingerichtet, im Zerspan-Bearbeitungsprozess gleich oder weniger als insgesamt 50 ml Kühl- und/oder Schmiermittel in der Stunde zu verbrauchen. Hier und vorzugsweise werden im Zerspan-Bearbeitungsprozess maximal 50 ml, weiter vorzugsweise maximal 40 ml, weiter vorzugsweise maximal 30 ml, Kühl- und/oder Schmiermittel in der Stunde verbraucht.

Es ist eine Kühl- und/oder Schmiermittelquelle 26 zur Versorgung des Einspritzventils mit Kühl- und/oder Schmiermittel 4 vorgesehen. Das Kühl- und/oder Schmiermittel 4 ist hier und vorzugsweise flüssig. Es wird hier und vorzugsweise von der Kühl- und/oder Schmiermittelquelle 26 mit einem Druck von 50 bis 250 bar, vorzugsweise von 80 bis 220 bar, weiter vorzugsweise von 100 bis 200 bar, weiter vorzugsweise von 130 bis 170 bar, hier von 150 bar, bereitgestellt. So hohe Drücke ermöglichen bereits beim Einspritzen in die Einspritzkammer 9 eine gute Verteilung des Kühl- und/oder Schmiermittels 4.

Ferner weist das Minimalmengenschmiersystem 2 eine Druckluftquellenanordnung 27 zur Versorgung des ersten und/oder zweiten Zuführkanals 13, 15 mit Druckluft auf. Vorzugsweise ist eine einzige Druckluftquelle zur Versorgung beider Zuführkanäle 13, 15 mit Druckluft vorgesehen. Alternativ können jedoch auch zwei getrennte Druckluftquellen die Druckluftquellenanordnung 27 ausbilden und eine erste Druckluftquelle versorgt den ersten Zuführkanal 12 mit Druckluft und eine zweite Druckluftquelle versorgt den zweiten Zuführkanal 14 mit Druckluft. Die Druckluft wird vorzugsweise aus Umgebungsluft erzeugt.

Im Ausführungsbeispiel weist das Minimalmengenschmiersystem 2 eine Druckluftquelle auf, welche die Druckluft für den ersten Druckluftstrom 13 und den zweiten Druckluftstrom 14 bereitstellt. Hier kann beispielsweise in der Zuleitung für den ersten Druckluftstrom 13 ein Nachverdichter 28 vorgesehen sein, welcher den Druck des ersten Druckluftstroms 13 durch Nachverdichtung erhöht. Besonders bevorzugt ist es so, dass dem ersten Zuführkanal 12 Druckluft mit einem höheren Druck bereitgestellt wird als dem zweiten Zuführkanal 14. Die Druckdifferenz der Druckbereitstellung beträgt hier und vorzugsweise 2 bis 8 bar. Weiter vorzugsweise beträgt sie 4 bis 6 bar, weiter vorzugsweise im Wesentlichen 5 bar. Vorzugsweise wird dem ersten Zuführkanal 12 Druckluft bei aufgebautem Transportstrom 18 mit einem Druck von 3 bis 8 bar, weiter vorzugsweise 4 bis 7 bar, im Ausführungsbeispiel von 6 bar, bereitgestellt und/oder dem zweiten Zuführkanal 14 Druckluft bei aufgebautem Transportstrom 18 mit einem Druck von 8 bis 15 bar, weiter vorzugsweise 9 bis 13 bar, hier 11 bar, bereitgestellt. Der Druck des ersten und des zweiten Druckluftstroms 13, 15 sind vorzugsweise voneinander getrennt einstellbar.

Die vorschlagsgemäße Bearbeitungsanlage 1, wie diese in der Fig. 1 gezeigt ist, weist ein Werkzeug 5 und ein Minimalmengenschmiersystem 2 mit einer Zerstäubereinheit 3 auf. Die Bearbeitungsanlage 1 weist eine Spindel 29 mit einer Werkzeugaufnahme 30 zur Aufnahme des Werkzeugs 5 auf. Hier weist die Bearbeitungsanlage 1 einen Endeffektor 31 auf, in welchem die Spindel 29 angeordnet ist. Die Druckluftquellenanordnung 27 und/oder die Kühl- und/oder Schmiermittelquelle 26 ist dabei hier und vorzugsweise entfernt vom Endeffektor 31 angeordnet. Die Zerstäubereinheit 3 wiederum ist vorzugsweise am Endeffektor 31 angeordnet.

Vorzugsweise handelt es sich bei der Bearbeitungsanlage 1 um eine Bohrmaschine, hier um eine Bohr-Nietmaschine. Das Werkzeug 5 ist im Ausführungsbeispiel ein Bohrer. Die Spindel 29 ist hier und vorzugsweise Bestandteil einer Bohreinheit 32 des Endeffektors 31. Zusätzlich kann der Endeffektor 31 eine Nieteinheit 33 zum Setzen von Nietelementen in ein mit der Bohreinheit 32 gebohrtes Loch aufweisen.

Außerdem weist die Bearbeitungsanlage 1 eine Steuerungsanordnung 34 zur Steuerung der Bearbeitungsanlage 1 und des Minimalmengenschmiersystems 2 und damit des Zerspan-Bearbeitungsprozesses auf. Hier und vorzugsweise weist die Steuerungsanordnung 34 eine Bearbeitungsanlagensteuerung 34a und gegebenenfalls eine Minimalmengenschmiersystemsteuerung 34b auf. Bei der Bearbeitungsanlagensteuerung 34a handelt es sich vorzugsweise um eine SPS-Steuerung. Sie steuert den Zerspan-Bearbeitungsprozess. Die Minimalmengenschmiersystemsteuerung 34b erhält hier und vorzugsweise von der Bearbeitungsanlagensteuerung 34a Parameter für die Steuerung des Minimalmengenschmiersystems 2. In Abhängigkeit von diesen wird das Minimalmengenschmiersystem 2, insbesondere die Zerstäubereinheit 3 des Minimalmengenschmiersystems 2, gesteuert. Dies erfolgt insbesondere über das Beifügen des Kühl- und/oder Schmiermittels 4 mittels des Einspritzventils 16 sowie über das Schalten des Transportstroms 18 und/oder die Temperatureinstellung der Heizung 20.

Wie in der Fig. 1 gezeigt, ist die Zerstäubereinheit 3 hier und vorzugsweise au-ßerhalb der Spindel 29 angeordnet. Dies ist insbesondere bei kleinen und kompakten Spindeln 29 notwendig. Eine Anordnung der Zerstäubereinheit 3 in der Spindel 29 ist hier bauraumbedingt nämlich zumeist nicht möglich. Der Weiterführungskanal 19 verläuft hier von der Zerstäubereinheit 3 durch die Spindel 29 und das Werkzeug 5 zur Bearbeitungsstelle 7.

Die Zerstäubereinheit 3 ist in Strömungsrichtung des Transportstroms 18 vor der Spindel 29 angeordnet. Vorzugsweise beträgt der Strömungsweg von der Zerstäubereinheit 3 bis zur Spindel 29 weniger als 50 cm, weiter vorzugsweise weniger als 20 cm, weiter vorzugsweise weniger als 10 cm. Je dichter sich die Zerstäubereinheit 3 an der Spindel 29 befindet, desto kürzere Latenzzeiten für das Zu- und/oder Wegschalten des Aerosols können erreicht werden.

Vorzugsweise ist es so, dass die Spindelachse S das Einspritzventil 16 und/oder die Düse 11 schneidet. Weiter vorzugsweise ist die Spindelachse S koaxial zur Mittelachse M_{E} des Einspritzventils 16 und/oder zur Mittelachse M_{D} der Düse 11 angeordnet. Dies ermöglicht eine besonders gute Führung des Aerosols im Weiterführungskanal 19. Alternativ können die Spindelachse S und die Mittelachse M_{E} und/oder die Mittelachse M_{D} auch nicht koaxial angeordnet sein. Bevorzugt sind sie dann parallel zueinander ausgebildet oder ihr Schnittpunkt ist vorzugsweise maximal 20 cm, weiter vorzugsweise maximal 10 cm, von der Zerstäubereinheit 3 entfernt angeordnet.

Zusätzlich oder alternativ kann eine Zerstäubereinheit 3a vorgesehen sein, von der aus ein Weiterfügungskanal 19a am Werkzeug vorbei zur Bearbeitungsstelle 7 geführt wird, wie dies in der Fig. 1 gezeigt ist. Diese zusätzliche oder alternative Zerstäubereinheit 3a ist vorzugsweise wie beschrieben ausgebildet. Vorzugsweise werden im Falle von zwei Zerstäubereinheiten 3, 3a beide mittels derselben Druckluftquellenanordnung 27 und/oder Kühl- und/oder Schmiermittelquelle 26 versorgt. Hier werden beide von derselben Steuerungsanordnung 34 gesteuert, wobei beide Zerstäubereinheiten 3, 3a von separaten oder derselben Minimalmengenschmiersystemsteuerung 34b gesteuert und/oder geregelt werden können.

Nachfolgend soll der Zerspan-Bearbeitungsprozess näher beschrieben werden. Besonders bevorzugt ist es, wenn vor oder während eines Zerspan-Bearbeitungsprozesses der Transportstrom 18 aufgebaut wird und im aufgebauten Transportstrom das Kühl- und/oder Schmiermittel 4 mit dem Transportstrom 18 ein Aerosol bildend beigefügt wird.

Das Aerosol kann dann auf besonders einfache Art und Weise durch den Transportstrom 18 zur Bearbeitungsstelle 7 transportiert werden. Das Aufbauen des Transportstroms 18 vor dem Einspritzen des Kühl- und/oder Schmiermittels 4 ermöglicht eine sehr genaue Steuerung des Zufügens des Kühl- und/oder Schmiermittels 4 sowie dessen Transport zur Bearbeitungsstelle 7 und damit ein sehr genaues Steuern der Kühlung bzw. Schmierung an der Bearbeitungsstelle 7. Hierdurch können geringe Mengen Kühl- und/oder Schmiermittel 4 zu genau den Zeitpunkten eingesetzt werden, zu denen das Kühl- und/oder Schmiermittel 4 tatsächlich benötigt wird oder einen Vorteil bietet.

Im Ausführungsbeispiel wird das Kühl- und/oder Schmiermittel 4 erst nach dem Ausbilden eines konstanten Transportstroms 18 beigefügt, also dann, wenn der Transportstrom 18 sich quasi stationär ausgebildet hat. Dies ermöglicht es, die Zeitspanne, nach der das Aerosol nach dem Ansteuern des Einspritzventils 16 zum Einspritzen des Kühl- und/oder Schmiermittels 4 aus der mindestens einen Austrittsöffnung des Werkzeugs 5 austritt, sehr genau zu bestimmen. Besonders bevorzugt wird es, dass das Kühl- und/oder Schmiermittel 4 derart dem Transportstrom 18 beigefügt wird, dass das Aerosol erst nach dem Eintauchen, insbesondere vollständigen Eintauchen, mindestens einer Austrittsöffnung des Werkzeugs 5 in das Werkstück 6 aus der mindestens einen Austrittsöffnung austritt.

Vorzugsweise kann, insbesondere von einem Bediener, das Minimalmengenschmiersystem 2 für ein Werkstück 6 und/oder ein Werkstückteil 6a, 6b, insbesondere für jede Lage des Werkstücks 6 und/oder eines Werkstückteils 6a/6b, im Zerspan-Bearbeitungsprozess eingestellt und/oder parametrisiert werden. Hierdurch kann für verschiedene Lagen, insbesondere jede Lage, des Werkstücks 6 bzw. Werkstückteils 6a, 6b die Kühlung und/oder Schmierung angepasst werden. Das Einstellen und/oder Parametrisieren erfolgt hier und vorzugsweise vor dem Beginn des Zerspan-Bearbeitungsprozesses.

Vorzugsweise ist der Druck des Transportstroms 18, insbesondere der Druck des ersten Druckluftstroms 13 und/oder des zweiten Druckluftstroms 15, und die verwendete Kühl- und/oder Schmiermittelmenge, insbesondere durch den Bediener, einstellbar und/oder parametrisierbar. Das Einstellen und/oder Parametrisieren erfolgt hier und vorzugsweise vor dem Beginn des Zerspan-Bearbeitungsprozesses. Hier und vorzugsweise wird zum einen der Druck des zweiten Druckluftstroms 15 vom Bediener parametrisiert und die Steuerungsanordnung 34, insbesondere die Minimalmengenschmiersystemsteuerung 34b, stellt basierend auf der Parametrisierung des zweiten Druckluftstroms 15 den ersten und den zweiten Druckluftstrom 13, 15 ein. Zusätzlich oder alternativ kann der Bediener die Kühl- und/oder Schmiermittelmenge parametrisieren. Hier und vorzugsweise stellt die Steuerungsanordnung 34, insbesondere die Minimalmengenschmiersystemsteuerung 34b, basierend auf der Parametrisierung der Kühl- und/oder Schmiermittelmenge den Druck des Kühl- und/oder Schmiermittels 4 und/oder die Ansteuerung des Einspritzventils 16 ein. Die Einstellung der Ansteuerung des Einspritzventils 16 erfolgt hier und vorzugsweise durch die Bestimmung der Ansteuerfrequenz und/oder der Öffnungsdauer und/oder einen Transienten, welcher einen Flatterstatus des Einspritzventils 16 beschreibt. Dies kann vorzugsweise vom Bediener eingestellt werden.

Vorzugsweise sieht die Steuerungsanordnung 34 unterschiedliche Öffnungsdauern des Einspritzventils 16 in Abhängigkeit von der Viskosität des gerade verwendeten Kühl- und/oder Schmiermittels 4 vor.

Insbesondere kann im Zerspan-Bearbeitungsprozess für eine erste Lage des Werkstücks die Kühlung und/oder Schmierung anders eingestellt werden als für eine zweite Lage des Werkstücks 6. Zusätzlich oder alternativ kann das Beifügen von Kühl- und/oder Schmiermittel 4 für einzelne Lagen des Werkstücks 6 abgestellt werden, insbesondere wenn diese Lagen aus Faserverbundwerkstoff, insbesondere aus einem kohlenstofffaserverstärkten Kunststoff (CFK), sind.

Am Ende des Zerspan-Bearbeitungsprozesses, insbesondere nachdem ein Loch gebohrt wurde, wird vorzugsweise beim Rückziehen des Werkzeugs 5 aus dem Werkstück 6 der erste Druckluftstrom 13 und der zweite Druckluftstrom 15 angeschaltet, ohne dass Kühl- und/oder Schmiermittel 4 eingespritzt wird. Dies erfolgt vorzugsweise für mindestens 150 ms, weiter vorzugsweise mindestens 200 ms, weiter vorzugsweise mindestens 250 ms. Hierdurch kann die Oberfläche des Werkstücks 6 beim Herausziehen des Werkzeugs 5 gereinigt werden und/oder Reste von Kühl- und/oder Schmiermittel 4 können aus dem Weiterfügungskanal 19 und/oder der Zerstäubereinheit 3 ausgeblasen werden.

Die Bearbeitungsanlage 1, insbesondere das Minimalmengenschmiersystem 2, kann hier den Aerosolfluss und/oder die Aerosolkonzentration überwachen. Ferner kann sie bzw. es basierend auf dieser Überwachung regelnd und/oder steuernd in den Zerspan-Bearbeitungsprozess eingreifen, insbesondere indem sie bzw. es Parametereinstellungen des Minimalmengenschmiersystems 3 anpasst.

Die Überwachung kann direkt und/oder indirekt erfolgen. Beispielsweise kann die Überwachung indirekt durch eine Überwachung des Kühl- und/oder Schmiermittelverbauchs und/oder des ersten Druckluftstroms 13 und/oder des zweiten Druckluftstroms 15 erfolgen.

Direkt kann die Überwachung beispielsweise mittels eines Sensors, insbesondere Lasersensors, im Weiterführungskanal 19 erfolgen.

## Patentansprüche

1. Zerstäubereinheit eines Minimalmengenschmiersystems (2) zum Kühlen und/oder Schmieren eines Zerspan-Bearbeitungs-Prozesses zwischen einem Werkzeug (5) und einem Werkstück (6) an einer Bearbeitungsstelle (7),
wobei die Zerstäubereinheit (3) eine Kammeranordnung (8) mit einer Einspritzkammer (9) und mit einer Zerstäuberkammer (10) aufweist, wobei die Einspritzkammer (9) durch eine Düse (11) mit der Zerstäuberkammer (10) verbunden ist,
wobei die Zerstäubereinheit (3) mindestens einen ersten Zuführkanal (12) zum Zuführen eines ersten Druckluftstroms (13) in die Einspritzkammer (9) und mindestens einen zweiten Zuführkanal (14) zum Zuführen eines zweiten Druckluftstroms (15) in die Zerstäuberkammer (10) aufweist,
wobei die Zerstäubereinheit (3) ein Einspritzventil (16) zum Einspritzen eines Kühl- und/oder Schmiermittels (4) in den ersten Druckluftstrom (13) im Einspritzbereich (17) der Einspritzkammer (9) aufweist,
wobei die Zerstäubereinheit (3) derart ausgestaltet ist, dass der erste Druckluftstrom (13), gegebenenfalls mit dem eingespritzten Kühl- und/oder Schmiermittel (4), durch die Düse (11) von der Einspritzkammer (9) in die Zerstäuberkammer (10) strömt und darin von der Düse (11) zerstäubt wird,
wobei sich der erste Druckluftstrom (13), gegebenenfalls mit dem eingespritzten Kühl- und/oder Schmiermittel (4), in der Zerstäuberkammer (10) mit dem zweiten Druckluftstrom (15) zu einem Transportstrom (18) zum Transport des eingespritzten Kühl- und/oder Schmiermittels (4) vereinigt und zur Bearbeitungsstelle (7) leitbar ist,
wobei die Zerstäubereinheit (3) eine Heizung (20) aufweist, welche das Kühl- und/oder Schmiermittel (4) und/oder den ersten Druckluftstrom (13) und/oder den zweiten Druckluftstrom (15) und/oder den Transportstrom (18) erwärmt.

2. Zerstäubereinheit nach Anspruch 1, **dadurch gekennzeichnet, dass** die Heizung (20) das Kühl- und/oder Schmiermittel (4) vor dem Einspritzen aus dem Einspritzventil (16) in den ersten Druckluftstrom (13) erwärmt.

3. Zerstäubereinheit nach Anspruch 1 oder 2, **dadurch gekennzeichnet, dass** das Einspritzventil (16) in einem, insbesondere mehrteiligen, Block (21), insbesondere Metallblock, aufgenommen ist, vorzugsweise, dass in dem Block (21) zusätzlich die Heizung (20) und/oder ein Temperaturfühler (22) angeordnet ist, weiter vorzugsweise, dass die Heizung (20) den Block (21) erwärmt und dieser das Kühl- und/oder Schmiermittel (4) erwärmt.

4. Zerstäubereinheit nach einem der vorhergehenden Ansprüche, **dadurch gekennzeichnet, dass** der Block (21) zumindest einen Teil der Einspritzkammer (9) bildet und/oder zumindest einen Teil der Zerstäuberkammer (10) bildet und/oder die Düse (11) in dem Block (21) gelagert ist.

5. Zerstäubereinheit nach einem der vorhergehenden Ansprüche, **dadurch gekennzeichnet, dass** die Einspritzkammer (9) ein Volumen von maximal 10.000 mm³, weiter vorzugsweise von maximal 1.00 mm³, weiter vorzugsweise von maximal 500 mm³, weiter vorzugsweise von 250 mm³, hat,
und/oder,
dass die Zerstäuberkammer (10) ein Volumen von maximal 20.000 mm³, weiter vorzugsweise von maximal 5.000 mm³, weiter vorzugsweise von maximal 1.000 mm³, weiter vorzugsweise von 750 mm³ hat.

6. Zerstäubereinheit nach einem der vorhergehenden Ansprüche, **dadurch gekennzeichnet, dass** die Düse (11) maximal 10 cm, vorzugsweise maximal 5 cm, weiter vorzugsweise maximal 3 cm, weiter vorzugsweise maximal 1,5 cm, von dem Einspritzventil (16), insbesondere dem Auslassende (16a) des Einspritzventils (16), entfernt angeordnet ist.

7. Zerstäubereinheit nach einem der vorhergehenden Ansprüche, **dadurch gekennzeichnet, dass** die Durchtrittsöffnungsweite der Durchtrittsöffnung (11a) der Düse (11) maximal 0,5 mm, vorzugsweise maximal 0,3 mm, weiter vorzugsweise maximal 0,2 mm, beträgt.

8. Zerstäubereinheit nach einem der vorhergehenden Ansprüche, **dadurch gekennzeichnet, dass** das Einspritzventil (16) ein Hochdruck-Einspritzventil, insbesondere ein Benzindirekteinspritzventil, ist.

9. Zerstäubereinheit nach einem der vorhergehenden Ansprüche, **dadurch gekennzeichnet, dass** das Einspritzventil (16) pulsartig angesteuert wird, vorzugsweise, dass die Öffnungsdauer des Einspritzventils (16) kürzer ist als die Dauer zwischen zwei Öffnungen des Einspritzventils (16).

10. Minimalmengenschmiersystem mit einer Zerstäubereinheit nach einem der vorhergehenden Ansprüche, mit einer Kühl- und/oder Schmiermittelquelle (26) zur Versorgung des Einspritzventils (16) mit Kühl- und/oder Schmiermittel (4) und mit einer Druckluftquellenanordnung (27) zur Versorgung des ersten und/oder zweiten Zuführkanals (13, 15) mit Druckluft.

11. Minimalmengenschmiersystem nach Anspruch 10, **dadurch gekennzeichnet, dass** das Kühl- und/oder Schmiermittel (4) von der Kühl- und/oder Schmiermittelquelle (26) mit einem Druck von 50 bis 250 bar, vorzugsweise von 80 bis 220 bar, weiter vorzugsweise von 100 bis 200 bar, weiter vorzugsweise von 130 bis 170 bar, weiter vorzugsweise von 150 bar, bereitgestellt wird,
und/oder,
dass dem ersten Zuführkanal (12) Druckluft bei aufgebautem Transportstrom (18) mit einem Druck von 3 bis 8 bar, vorzugsweise von 4 bis 7 bar, weiter vorzugsweise von 6 bar, bereitgestellt wird,
und/oder,
dass dem zweiten Zuführkanal (14) Druckluft bei aufgebautem Transportstrom (18) mit einem Druck von 8 bis 15 bar, vorzugsweise von 9 bis 13 bar, weiter vorzugsweise von 11 bar, bereitgestellt wird.

12. Bearbeitungsanlage zum Zerspanen eines Werkstücks (6), wobei die Bearbeitungsanlage (1) ein Werkzeug (5) und eine Zerstäubereinheit (3) nach einem der Ansprüche 1 bis 9 oder ein Minimalmengenschmiersystem (2) nach Anspruch 10 oder 11 aufweist.

13. Bearbeitungsanlage nach Anspruch 12, **dadurch gekennzeichnet, dass** die Bearbeitungsanlage (1) eine Spindel (29) mit einer Werkzeugaufnahme (30) aufweist und dass der Weiterführungskanal (19) von der Zerstäubereinheit (3) durch die Spindel (29) und das Werkzeug (6) zur Bearbeitungsstelle (7), insbesondere gerade, verläuft.

14. Bearbeitungsanlage nach Anspruch 12 oder 13, **dadurch gekennzeichnet, dass** die Bearbeitungsanlage (1) eine Bohrmaschine, insbesondere eine Bohr-/Nietmaschine, ist und dass das Werkzeug (6) ein Bohrer ist.

15. Verfahren zum Betreiben einer Zerstäubereinheit (3), insbesondere nach einem der Ansprüche 1 bis 9, oder einer Minimalmengenschmieranlage (2), insbesondere nach Anspruch 10 oder 11, oder einer Bearbeitungsanlage (1), insbesondere nach einem der Ansprüche 12 bis 14,
wobei die Zerstäubereinheit (3) eine Kammeranordnung (8) mit einer Einspritzkammer (9) und mit einer Zerstäuberkammer (10) aufweist, wobei die Einspritzkammer (9) durch eine Düse (11) mit der Zerstäuberkammer (10) verbunden ist,
wobei die Zerstäubereinheit (3) mindestens einen ersten Zuführkanal (12) zum Zuführen eines ersten Druckluftstroms (13) in die Einspritzkammer (9) und mindestens einen zweiten Zuführkanal (14) zum Zuführen eines zweiten Druckluftstroms (15) in die Zerstäuberkammer (10) aufweist,
wobei die Zerstäubereinheit (3) ein Einspritzventil (9) zum Einspritzen eines Kühl- und/oder Schmiermittels (4) in den ersten Druckluftstrom (13) im Einspritzbereich (17) der Einspritzkammer (9) aufweist,
wobei der erste Druckluftstrom (13), gegebenenfalls mit dem eingespritzten Kühl- und/oder Schmiermittel (4), durch die Düse (11) von der Einspritzkammer (9) in die Zerstäuberkammer (10) strömt und darin von der Düse (11) zerstäubt wird,
wobei sich der erste Druckluftstrom (13), gegebenenfalls mit dem eingespritzten Kühl- und/oder Schmiermittel (4), in der Zerstäuberkammer mit dem zweiten Druckluftstrom (15) zu einem Transportstrom (18) zum Transport des eingespritzten Kühl- und/oder Schmiermittels (4) vereinigt und wobei der Transportstrom (18) durch einen Weiterführungskanal (19) zu einer Bearbeitungsstelle (7) geführt wird,
wobei die Zerstäubereinheit (3) eine Heizung (20) aufweist, welche das Kühl- und/oder Schmiermittel (4) und/oder den ersten Druckluftstrom (13) und/oder den zweiten Druckluftstrom (15) und/oder den Transportstrom (18) vor dem Eintritt in den Weiterführungskanal (19) erwärmt.

## Claims

1. Atomizer unit of a minimal quantity lubrication system (2) for cooling and/or lubricating a subtractive machining process between a tool (5) and a workpiece (6) at a machining location (7), wherein the atomizer unit (3) has a chamber assembly (8) having an injection chamber (9) and having an atomizer chamber (10), wherein the injection chamber (9) is connected to the atomizer chamber (10) by way of a nozzle (11);
wherein the atomizer unit (3) has at least one first supply duct (12) for supplying a first compressed-air flow (13) into the injection chamber (9), and at least one second supply duct (14) for supplying a second compressed-air flow (15) into the atomizer chamber (10);
wherein the atomizer unit (3) has an injection valve (16) for injecting a coolant and/or lubricant (4) into the first compressed-air flow (13) in the injection region (17) of the injection chamber (9);
wherein the atomizer unit (3) is designed in such a manner that the first compressed-air flow (13), optionally conjointly with the injected coolant and/or lubricant (4), flows through the nozzle (11) from the injection chamber (9) into the atomizer chamber (10) and in the latter is atomized by the nozzle (11);
wherein the first compressed-air flow (13), optionally conjointly with the injected coolant and/or lubricant (4), is unified with the second compressed-air flow (15) in the atomizer chamber (10) so as to form a transport flow (18) for transporting the injected coolant and/or lubricant (4) and is able to be directed to the machining location (7);
wherein the atomizer unit (3) has a heating (20) which heats the coolant and/or lubricant (4) and/or the first compressed-air flow (13) and/or the second compressed-air flow (15) and/or the transport flow (18) .

2. Atomizer unit according to Claim 1, **characterized in that** the heating (20) heats the coolant and/or lubricant (4) prior to injection from the injection valve (16) into the first compressed-air flow (13).

3. Atomizer unit according to Claim 1 or 2, **characterized in that** the injection valve (16) is received in an in particular multi-part block (21), in particular a metal block, preferably **in that** the heating (20) and/or a temperature sensor (22) are/is additionally disposed in the block (21), furthermore preferably **in that** the heating (20) heats the block (21) and the latter heats the coolant and/or lubricant (4).

4. Atomizer unit according to one of the preceding claims, **characterized in that** the block (21) forms at least part of the injection chamber (9) and/or forms at least part of the atomizer chamber (10) and/or the nozzle (11) is mounted in the block (21).

5. Atomizer unit according to one of the preceding claims, **characterized in that** the injection chamber (9) has a volume of at most 10 000 mm³, furthermore preferably of at most 1 00 mm³, furthermore preferably of at most 500 mm³, furthermore preferably of 250 mm³,
and/or
**in that** the atomizer chamber (10) has a volume of at most 20 000 mm³, furthermore preferably of at most 5000 mm³, furthermore preferably of at most 1000 mm³, furthermore preferably of 750 mm³.

6. Atomizer unit according to one of the preceding claims, **characterized in that** the nozzle (11) is disposed so as to be spaced apart from the injection valve (16), in particular the outlet end (16a) of the injection valve (16) by at most 10 cm, preferably at most 5 cm, furthermore preferably at most 3 cm, furthermore preferably at most 1.5 cm.

7. Atomizer unit according to one of the preceding claims, **characterized in that** the passage opening width of the passage opening (11a) of the nozzle (11) is at most 0.5 mm, preferably at most 0.3 mm, furthermore preferably at most 0.2 mm.

8. Atomizer unit according to one of the preceding claims, **characterized in that** the injection valve (16) is a high-pressure injection valve, in particular a petrol direct injection valve.

9. Atomizer unit according to one of the preceding claims, **characterized in that** the injection valve (16) is activated in a pulsed manner, preferably **in that** the opening period of the injection valve (16) is shorter than the period between two openings of the injection valve (16).

10. Minimal quantity lubrication system having an atomizer unit according to one of the preceding claims, having a coolant and/or lubricant source (26) for supplying the injection valve (16) with coolant and/or lubricant (4), and having a compressed-air source assembly (27) for supplying the first and/or the second supply duct (13, 15) with compressed air.

11. Minimal quantity lubrication system according to Claim 10, **characterized in that** the coolant and/or lubricant (4) is provided by the coolant and/or lubricant source (26) at a pressure of 50 to 250 bar, preferably of 80 to 220 bar, furthermore preferably of 100 to 200 bar, furthermore preferably of 130 to 170 bar, furthermore preferably of 150 bar,
and/or
**in that** the first supply duct (12) in the case of an established transport flow (18) is provided with compressed air at a pressure of 3 to 8 bar, preferably of 4 to 7 bar, furthermore preferably of 6 bar
and/or
**in that** the second supply duct (14) in the case of an established transport flow (18) is provided with compressed air at a pressure of 8 to 15 bar, preferably of 9 to 13 bar, furthermore preferably of 11 bar.

12. Machining installation for the subtractive machining of a workpiece (6), wherein the machining installation (1) has a tool (5) and an atomizer unit (3) according to one of Claims 1 to 9, or a minimal quantity lubrication system (2) according to Claim 10 or 11.

13. Machining installation according to Claim 12, **characterized in that** the machining installation (1) has a spindle (29) having a tool holder (30), and **in that** the transmission duct (19) from the atomizer unit (3) runs, in particular straight, through the spindle (29) and the tool (6) to the machining location (7).

14. Machining installation according to Claim 12 or 13, **characterized in that** the machining installation (1) is a drilling machine, in particular a drilling/riveting machine, and **in that** the tool (6) is a drill bit.

15. Method for operating an atomizer unit (3), in particular according to one of Claims 1 to 9, or a minimal quantity lubrication system (2), in particular according to Claim 10 or 11, or a machining installation (1), in particular according to one of Claims 12 to 14,
wherein the atomizer unit (3) has a chamber assembly (8) having an injection chamber (9) and having an atomizer chamber (10), wherein the injection chamber (9) is connected to the atomizer chamber (10) by way of a nozzle (11);
wherein the atomizer unit (3) has at least one first supply duct (12) for supplying a first compressed-air flow (13) into the injection chamber (9), and at least one second supply duct (14) for supplying a second compressed-air flow (15) into the atomizer chamber (10);
wherein the atomizer unit (3) has an injection valve (9) for injecting a coolant and/or lubricant (4) into the first compressed-air flow (13) in the injection region (17) of the injection chamber (9);
wherein the first compressed-air flow (13), optionally conjointly with the injected coolant and/or lubricant (4), flows through the nozzle (11) from the injection chamber (9) into the atomizer chamber (10) and in the latter is atomized by the nozzle (11);
wherein the first compressed-air flow (13), optionally conjointly with the injected coolant and/or lubricant (4), is unified with the second compressed-air flow (15) in the atomizer chamber so as to form a transport flow (18) for transporting the injected coolant and/or lubricant (4), and wherein the transport flow (18) is routed through a transmission duct (19) to a machining location (7);
wherein the atomizer unit (3) has a heating (20) which heats the coolant and/or lubricant (4) and/or the first compressed-air flow (13) and/or the second compressed-air flow (15) and/or the transport flow (18) prior to entering the transmission duct (19).

## Revendications

1. Unité d'atomisation d'un système de lubrification à quantité minimale (2) pour refroidir et/ou lubrifier un processus d'usinage par enlèvement de copeaux entre un outil (5) et une pièce (6) à un emplacement d'usinage (7),
l'unité d'atomisation (3) présentant un agencement de chambre (8) avec une chambre d'injection (9) et avec une chambre d'atomisation (10), la chambre d'injection (9) étant reliée à la chambre d'atomisation (10) par une buse (11),
l'unité d'atomisation (3) présentant au moins un premier canal d'amenée (12) pour amener un premier courant d'air comprimé (13) dans la chambre d'injection (9) et au moins un deuxième canal d'amenée (14) pour amener un deuxième courant d'air comprimé (15) dans la chambre d'atomisation (10),
l'unité d'atomisation (3) présentant une soupape d'injection (16) pour injecter un agent de refroidissement et/ou de lubrification (4) dans le premier courant d'air comprimé (13) dans la zone d'injection (17) de la chambre d'injection (9),
l'unité d'atomisation (3) étant conçue de telle sorte que le premier courant d'air comprimé (13), éventuellement avec l'agent de refroidissement et/ou de lubrification (4) injecté, s'écoule à travers la buse (11) de la chambre d'injection (9) dans la chambre d'atomisation (10) et y est atomisé par la buse (11),
le premier courant d'air comprimé (13), éventuellement avec l'agent de refroidissement et/ou de lubrification injecté (4), se réunissant dans la chambre d'atomisation (10) avec le deuxième courant d'air comprimé (15) en un courant de transport (18) pour transporter l'agent de refroidissement et/ou de lubrification injecté (4) et pouvant être conduit vers l'emplacement d'usinage (7),
l'unité d'atomisation (3) présentant un chauffage (20) qui chauffe l'agent de refroidissement et/ou de lubrification (4) et/ou le premier courant d'air comprimé (13) et/ou le deuxième courant d'air comprimé (15) et/ou le courant de transport (18).

2. Unité d'atomisation selon la revendication 1, **caractérisée en ce que** le chauffage (20) chauffe l'agent de refroidissement et/ou de lubrification (4) avant l'injection à partir de la soupape d'injection (16) dans le premier courant d'air comprimé (13).

3. Unité d'atomisation selon la revendication 1 ou 2, **caractérisée en ce que** la soupape d'injection (16) est logée dans un bloc (21), notamment un bloc métallique, notamment en plusieurs parties, de préférence **en ce que** le chauffage (20) et/ou un capteur de température (22) sont en outre agencés dans le bloc (21), de préférence encore **en ce que** le chauffage (20) chauffe le bloc (21) et celui-ci chauffe l'agent de refroidissement et/ou de lubrification (4).

4. Unité d'atomisation selon l'une quelconque des revendications précédentes, **caractérisée en ce que** le bloc (21) forme au moins une partie de la chambre d'injection (9) et/ou forme au moins une partie de la chambre d'atomisation (10) et/ou la buse (11) est montée dans le bloc (21).

5. Unité d'atomisation selon l'une quelconque des revendications précédentes, **caractérisée en ce que** la chambre d'injection (9) a un volume d'au maximum 10 000 mm³, de préférence encore d'au maximum 1 00 mm³, de préférence encore d'au maximum 500 mm³, de préférence encore de 250 mm³,
et/ou
**en ce que** la chambre d'atomisation (10) a un volume d'au maximum 20 000 mm³, de préférence encore d'au maximum 5 000 mm³, de préférence encore d'au maximum 1 000 mm³, de préférence encore de 750 mm³.

6. Unité d'atomisation selon l'une quelconque des revendications précédentes, **caractérisée en ce que** la buse (11) est agencée à une distance maximale de 10 cm, de préférence à une distance maximale de 5 cm, de préférence encore à une distance maximale de 3 cm, de préférence encore à une distance maximale de 1,5 cm, de la soupape d'injection (16), notamment de l'extrémité de sortie (16a) de la soupape d'injection (16).

7. Unité d'atomisation selon l'une quelconque des revendications précédentes, **caractérisée en ce que** la largeur d'ouverture de passage de l'ouverture de passage (11a) de la buse (11) est de 0,5 mm maximum, de préférence de 0,3 mm maximum, de préférence encore de 0,2 mm maximum.

8. Unité d'atomisation selon l'une quelconque des revendications précédentes, **caractérisée en ce que** la soupape d'injection (16) est une soupape d'injection haute pression, notamment une soupape d'injection directe d'essence.

9. Unité d'atomisation selon l'une quelconque des revendications précédentes, **caractérisée en ce que** la soupape d'injection (16) est commandée par impulsions, de préférence **en ce que** la durée d'ouverture de la soupape d'injection (16) est inférieure à la durée entre deux ouvertures de la soupape d'injection (16).

10. Système de lubrification à quantité minimale avec une unité d'atomisation selon l'une quelconque des revendications précédentes, avec une source d'agent de refroidissement et/ou de lubrification (26) pour alimenter la soupape d'injection (16) en agent de refroidissement et/ou de lubrification (4) et avec un agencement de source d'air comprimé (27) pour alimenter le premier et/ou le deuxième canal d'amenée (13, 15) en air comprimé.

11. Système de lubrification à quantité minimale selon la revendication 10, **caractérisé en ce que** l'agent de réfrigération et/ou de lubrification (4) est fourni par la source d'agent de réfrigération et/ou de lubrification (26) à une pression de 50 à 250 bars, de préférence de 80 à 220 bars, de préférence encore de 100 à 200 bars, de préférence encore de 130 à 170 bars, de préférence encore de 150 bars,
et/ou
**en ce que** de l'air comprimé est fourni au premier canal d'amenée (12) lorsque le courant de transport (18) est établi à une pression de 3 à 8 bars, de préférence de 4 à 7 bars, de préférence encore de 6 bars,
et/ou
**en ce que** de l'air comprimé est fourni au deuxième canal d'amenée (14) lorsque le courant de transport (18) est établi à une pression de 8 à 15 bars, de préférence de 9 à 13 bars, de préférence encore de 11 bars.

12. Installation d'usinage pour l'enlèvement de copeaux d'une pièce (6), l'installation d'usinage (1) présentant un outil (5) et une unité d'atomisation (3) selon l'une quelconque des revendications 1 à 9 ou un système de lubrification à quantité minimale (2) selon la revendication 10 ou 11.

13. Installation d'usinage selon la revendication 12, **caractérisée en ce que** l'installation d'usinage (1) présente une broche (29) avec un logement d'outil (30) et **en ce que** le canal de transfert (19) s'étend, notamment en ligne droite, depuis l'unité d'atomisation (3) jusqu'à l'emplacement d'usinage (7) en passant par la broche (29) et l'outil (6).

14. Installation d'usinage selon la revendication 12 ou 13, **caractérisée en ce que** l'installation d'usinage (1) est une machine de perçage, notamment une machine de perçage/rivetage, et **en ce que** l'outil (6) est un foret.

15. Procédé d'exploitation d'une unité d'atomisation (3), notamment selon l'une quelconque des revendications 1 à 9, ou d'une installation de lubrification à quantité minimale (2), notamment selon la revendication 10 ou 11, ou d'une installation d'usinage (1), notamment selon l'une quelconque des revendications 12 à 14,
l'unité d'atomisation (3) présentant un agencement de chambre (8) avec une chambre d'injection (9) et avec une chambre d'atomisation (10), la chambre d'injection (9) étant reliée à la chambre d'atomisation (10) par une buse (11),
l'unité d'atomisation (3) présentant au moins un premier canal d'amenée (12) pour amener un premier courant d'air comprimé (13) dans la chambre d'injection (9) et au moins un deuxième canal d'amenée (14) pour amener un deuxième courant d'air comprimé (15) dans la chambre d'atomisation (10),
l'unité d'atomisation (3) présentant une soupape d'injection (9) pour injecter un agent de refroidissement et/ou de lubrification (4) dans le premier courant d'air comprimé (13) dans la zone d'injection (17) de la chambre d'injection (9),
le premier courant d'air comprimé (13), éventuellement avec l'agent de refroidissement et/ou de lubrification (4) injecté, s'écoulant à travers la buse (11) de la chambre d'injection (9) dans la chambre d'atomisation (10) et y étant atomisé par la buse (11),
le premier courant d'air comprimé (13), éventuellement avec l'agent de refroidissement et/ou de lubrification injecté (4), se réunissant dans la chambre d'atomisation avec le deuxième courant d'air comprimé (15) en un courant de transport (18) pour transporter l'agent de refroidissement et/ou de lubrification injecté (4) et le courant de transport (18) étant guidé à travers un canal de continuation (19) vers un emplacement d'usinage (7),
l'unité d'atomisation (3) présentant un chauffage (20) qui chauffe l'agent de refroidissement et/ou de lubrification (4) et/ou le premier courant d'air comprimé (13) et/ou le deuxième courant d'air comprimé (15) et/ou le courant de transport (18) avant l'entrée dans le canal de transfert (19).
